# EUROPEAN PATENT APPLICATION

(11) **EP 2 423 928 A1**
(43) Date of publication of application: **29.02.2012**
(21) Application number: 10791813.8
(22) Date of filing: 16.06.2010
(51) Int. Cl.: H01G 9/00, H01G 9/155, H01M 2/20, H01M 2/26, H01M 10/50

(54) **ELECTRICAL STORAGE UNIT**

(30) Priority: 25.06.2009 JP 2009150626
(71) Applicant: Panasonic Corporation, Kadoma-shi Osaka 571-8501 (JP)
(72) Inventor: INOUE, Tatehiko, 540-6207 Osaka (JP); KAWASAKI, Shusaku, 540-6207 Osaka (JP); SHIMAMOTO, Hideki, 540-6207 Osaka (JP); NOMOTO, Susumu, 540-6207 Osaka (JP)
(74) Representative: Kügele, Bernhard
(86) International application number: PCT/JP2010/003993
(87) International publication number: WO 2010/150489

(57) **Abstract**

An electrical storage unit includes an electrical storage section whose collector-exposed portion formed on both ends of an element is attached to a terminal plate or an outer case, and a pair of cooling plates making contact with an outer surface of the terminal plate or an outer bottom face of the outer case of the electrical storage section. This enables heat release from the electrical storage section to the cooling plate via a material with high heat conductivity, such as a metal member. Accordingly, the electrical storage section heated in charge and discharge cycles can be efficiently cooled.

## Description

### TECHNICAL FIELD

The present invention relates to electrical storage units used for backup power or regeneration in hybrid vehicles and fuel-cell cars, or for storing power.

### BACKGROUND ART

Motion energy is wastefully consumed typically in the form of heat energy from equipment during operation until the equipment stops. An idea of reuse of this wasted motion energy as electric energy, as required, by storing it tentatively in an electrical storage element has been examined. This reduces energy that will be consumed, and improves efficiency. For this purpose, an electrical storage unit employing the electrical storage element is used for supplying energy required for operating equipment in the form of required output. Candidates of this electrical storage element can be roughly classified into two types: capacitors and storage batteries.

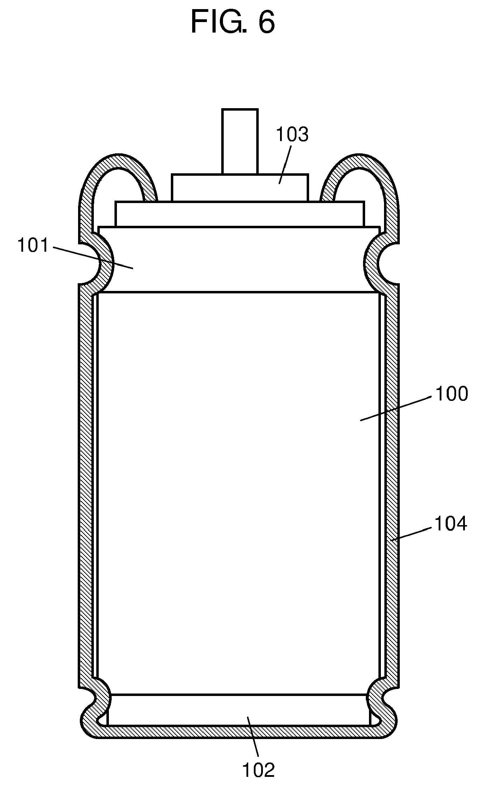

Fig. 6 is a sectional view of an electric double-layer capacitor used in a conventional electrical storage unit.

Element 100 includes a strip of positive electrode and a strip of negative electrode facing each other, and a separator disposed between the positive electrode and negative electrode. Each of the positive electrode and the negative electrode has extracting portions 101 and 102 where electrodes are not formed at their end, respectively. The positive electrode faces the negative electrode face in a deviated manner so that extracting portions 101 and 102 protrude from each other The positive electrode, negative electrode, and a separator are wound such that extracting portions 101 and 102 form both ends in a winding axis direction.

Extracting portion 101 of the positive electrode is bonded to metal terminal plate 103 typically by welding, and the positive electrode is lead out from terminal plate 103 to an external circuit.

Extracting portion 102 of the negative electrode is bonded by welding to an inner bottom face and an outer bottom face of tubular metal case 104 with bottom, and the negative electrode is led out from the outer surface of metal case 104 to the external circuit.

An insulating tape (not illustrated) is provided between terminal plate 103 and metal case 104 so that their inner faces do not make contact. By leading out each electrode in this way, a contact area of members acting as extracting terminals, such as terminal plate 103 and metal case 104, and element 100 can be increased. This reduces resistance inside the capacitor. A known conventional art related to this invention is, for example, PTL 1.

However, temperature of the electric double-layer capacitor increases as it repeats charge and discharge due to heat energy generated by internal resistance that the electric double-layer capacitor has. Alternatively, the temperature increases due to heat energy generated from electronic equipment where the electric double-layer capacitor is installed. This accelerates decomposition of solvent inside the metal case or carbonization of separator, decreasing reliability of the electric double-layer capacitor.

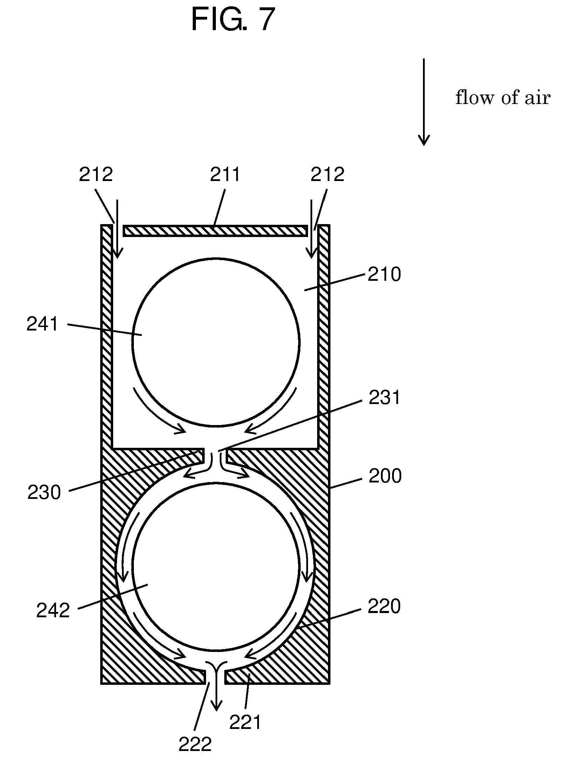

Fig. 7 is a top sectional view of the conventional electrical storage unit. The conventional electrical storage unit in Fig. 7 is an electrical storage unit, such as a capacitor unit, that is cooled. Holder 200 that holds multiple cell modules configuring the electrical storage unit includes chambers of two different shapes (first chamber 210 and second chamber 220). First chamber 210 and second chamber 220 are disposed adjacent to each other, and intermediate opening 231 is created on the surface of a wall dividing these chambers (intermediate partition 230) so as to create a united space. Air is supplied through a clearance generated between cell module 241 and each chamber by using an air blowing mechanism (not illustrated) provided outside holder 200. Air flows into first chamber 210 and second chamber 220 so as to cool cell module 241 and cell module 242 held inside.

First surface plate 211 configuring an outer wall of holder 200 has inflow opening 212 that is an inlet through which air enters. This enables air to flow in from inflow opening 212 to first chamber 210. The air then passes through intermediate opening 231 and to second chamber 220. The air further passes through outflow opening 222 provided on second surface plate 221 configuring the outer wall of holder 200 at the side of second chamber 220.

This configuration eliminates the need for forming duct in the middle of holder 200 for passing air to cool cell modules 241 and 242. Therefore, holder 200 can be downsized while efficiently cooling cell modules 241 and 242 to some extent. A known conventional art related to this invention is PTL 2.

However, recently, in order to attain more flexibility in installation inside electronic equipment, a demand for electrical storage units that satisfy further strict temperature condition is increasing. In line with this trend, a better cooling method for electrical storage unit has been required.

### [Citation List]

### Patent Literature

PTL 1 Japanese Patent Unexamined Publication No. 2006-351982
PTL2 Japanese Patent Unexamined Publication No. 2006-156211

### SUMMARY OF THE INVENTION

An electrical storage unit of the present invention includes an electrical storage section and a cooling section. The electrical storage section includes an element, an outer case, and a sealing member. The element includes a pair of collectors made of metal foil, a positive electrode formed on one of the pair of collectors, a negative electrode formed on the other of the pair of collectors, and a separator between a pair of electrodes, where the positive electrode and the negative electrode are a pair of electrodes. The outer case is made of a tubular metal with bottom for housing the element and electrolyte. The sealing member is made of metal for sealing an opening of the outer case in a state that a rim of the opening is insulated. The cooling section includes refrigerant for cooling the electrical storage section. Collector-exposed portions are provided on ends of the collector where the electrode is not formed. The element is wound or laminated such that the collector-exposed portions protrude in directions opposite to each other. The collector-exposed portion formed on one of the pair of collectors is bonded to an inner face of the sealing member, and the collector-exposed portion formed on the other of the pair of collectors is bonded to an inner bottom face of the outer case. The outer surface of the sealing member and the outer bottom face of the outer case directly or indirectly make contact with the cooling section in an insulated state.

In the electrical storage unit of the present invention as configured above, the collector-exposed portions formed at the ends of the positive electrode and the negative electrode are bonded to the inner bottom face of the collector and the inner bottom face of the outer case, respectively. Therefore, a contact area among the element, sealing member, and outer case can be enlarged.

In addition, at least the outer surface of the sealing member or the outer bottom face of the outer case is attached to the cooling section in the insulated state. Heat from the element is thus transmitted through this bonded portion where the contact area is enlarged. Accordingly, heat from the element is released outside more efficiently.

Furthermore, a distance from the element to the cooling section is shortened, and heat can be transmitted from the element to the cooling section all the way through a metal member with good heat conductivity. The heat conductivity between the element and cooling section can thus be further improved. Accordingly, the present invention can offer the electrical storage unit with good temperature retention characteristic also under high-temperature conditions.

### BRIEF DESCRIPTION OF DRAWINGS

Fig. 1 is an exploded perspective view of an electrical storage unit in accordance with a first exemplary embodiment of the present invention.
Fig. 2 is a front sectional view illustrating a capacitor and a connecting member used in the electrical storage unit in accordance with the first exemplary embodiment of the present invention.
Fig. 3 is a perspective view of the electrical storage unit in accordance with the first exemplary embodiment of the present invention.
Fig. 4A is a top view of the electrical storage unit in accordance with the first exemplary embodiment of the present invention.
Fig. 4B is a front view of the electrical storage unit in accordance with the first exemplary embodiment of the present invention.
Fig. 5 is a sectional perspective view of a cooling plate employed in the electrical storage unit in accordance with a second exemplary embodiment of the present invention.
Fig. 6 is a sectional view of an electric double-layer capacitor used in a conventional electrical storage unit.
Fig. 7 is a top sectional view of the conventional electrical storage unit.

### DESCRIPTION OF EMBODIMENTS

An electrical storage unit of the present invention is described below with reference to drawings. However, a scope of the present invention is not limited to the description below.

### (FIRST EXEMPLARY EMBODIMENT)

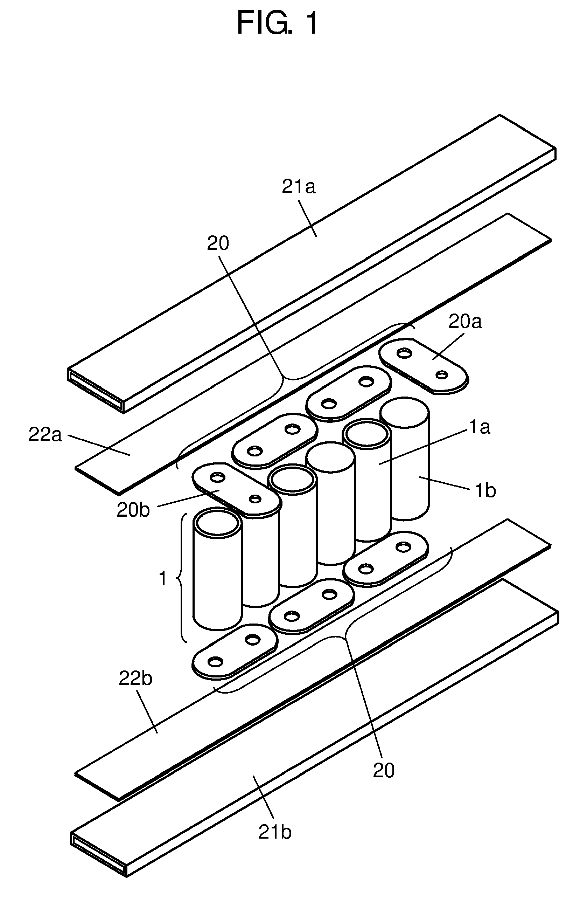

Fig. 1 is an exploded perspective view of an electrical storage unit in the first exemplary embodiment of the present invention.

In Fig. 1, the electrical storage unit in this exemplary embodiment includes electrical storage section 1, connecting member 20, a pair of cooling plates 21a and 21b (cooling section) for cooling electrical storage section 1, and a pair of insulating sheets 22a and 22b (insulating member). Electrical storage section 1 is configured with multiple cylindrical electric double-layer capacitors disposed adjacent to each other in parallel. Connecting member 20 is made of a metal plate for electrically connecting electrical storage section 1.

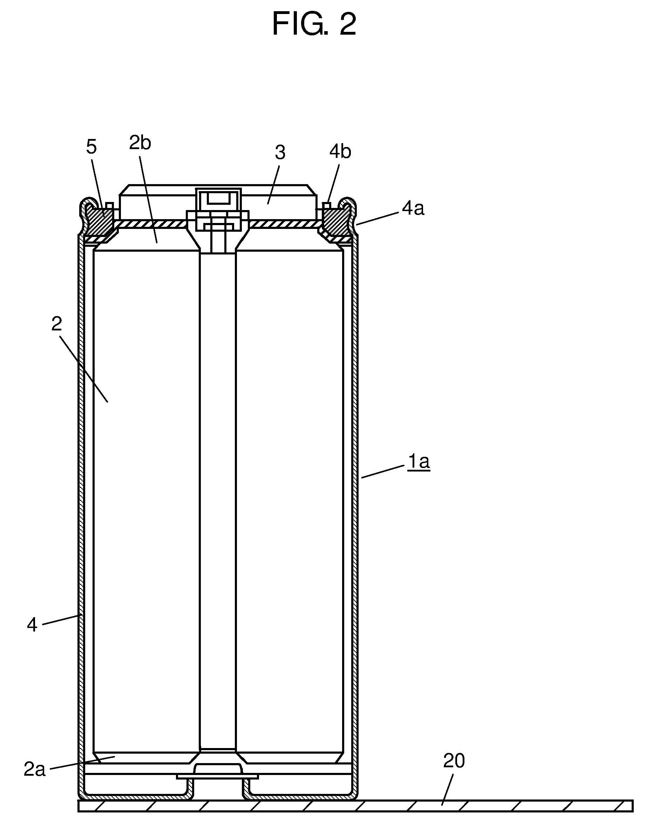

Fig. 2 is a front sectional view of the capacitor and connecting member used in the electrical storage unit in the first exemplary embodiment of the present invention. In Fig. 2, single electric double-layer capacitor 1a configuring electrical storage section 1 includes element 2, cylindrical outer case 4 with bottom for housing element 2 and electrolytic solution (not illustrated), and terminal plate 3. Terminal plate 3 is a metal sealing member for sealing a rim of opening of outer case 4 with a sealing material 5, which is the insulating member, therebetween.

Activated carbon is applied to the surface and rear face of one of the pair of collectors formed of aluminum foil, so as to form a positive electrode. Activated carbon is applied to the surface and rear face of the other collector to form a negative electrode. Element 2 includes the positive electrode, the negative electrode, and a separator between opposing positive and negative electrodes. Collector-exposed portion 2a and collector-exposed portion 2b, which are portions where the collectors are exposed on the surface without forming electrodes, are formed on ends of the pair of collectors of element 2, respectively.

In Fig. 2, collector-exposed portion 2a and collector-exposed portion 2b are protruding in opposite directions.

A material of this separator is, for example, cellulose paper, polypropylene, polyethylene terephthalate (PET), or polyimide. However, the present invention is not limited to these materials.

These negative electrode, positive electrode, and separator are wound to form element 2. By manufacturing wound element 2 in this way, protruded collector-exposed portion 2a and collector-exposed portion 2b are concentrated at both ends of wound element 2 in a winding axis direction, respectively.

Terminal plate 3 is made of aluminum, and terminal plate 3 faces collector-exposed portion 2b of element 2. Collector-exposed portion 2b and a face of terminal plate 3 facing element 2 are bonded typically by welding so that they are electrically connected.

Outer case 4 is, for example, a cylindrical aluminum case with bottom. The inner bottom face of outer case 4 faces collector-exposed portion 2a of element 2, and is bonded typically by welding so that they are electrically connected. Other than aluminum, outer case 4 may be made of aluminum alloy.

In Fig. 2, outer case 4 houses element 2 and electrolytic solution by sealing the opening by terminal plate 3. Solvent composing this electrolytic solution may be at least propylene carbonate (PC), ethylene carbonate (EC), or dimethyl carbonate (DMC). Electrolyte is typically at least tetraethyl ammonium tetrafluoroborate (TEABF4), triethylmethyl ammonium tetrafluoroborate (TEMABF4), 1-ethyl-3-methyl imidazolium tetrafluoroborate (EMIBF4), 1-ethyl-2, 3-dimethylimidazolium tetrafluoroborate (EDMIBF4), 1,2,3-trimethylimidazolium tetrafluoroborate (TMIBF4), or 1,3-dimethylimidazolium tetrafluoroborate (DMIBF4). However, the present invention does not particularly limit the solvent or electrolyte.

Sealing material 5 is press-fitted between the opening of outer case 4 and terminal plate 3, so as to seal the opening of the outer case 4 together with terminal plate 3. By using a material with good insulation property for sealing material 5, terminal plate 3 bearing polarity of the positive electrode or negative electrode is insulated from outer case 4.

Still more, drawing is made on outer case 4 from an outer peripheral face to inner peripheral face of outer case 4 where sealing material 5 makes contact, so as to improve the fixing and sealing strength of sealing material 5 (drawn part 4a). Furthermore, the rim of opening of outer case 4 is caulked by curling inward from outside (curling portion 4b). By forming this curling portion 4b, sealing material 5 is pressure-bonded to the rim of opening of outer case 4, further increasing the sealing strength. For example, butyl rubber is used for sealing material 5. However, the material is not limited. Any material that can insulate between terminal plate 3 and outer case 4 is applicable.

Furthermore, electric double-layer capacitor 1b connected in parallel adjacent to electric double-layer capacitor 1a is connected such that terminal plate 3 is disposed in a reverse direction to electric double-layer capacitor 1a. In this way, the electrical storage unit in this exemplary embodiment is configured such that the electric double-layer capacitors are disposed in parallel adjacent to each other with their terminal plates 3 disposed opposite to each other.

The outer bottom face of outer case 4 of one of the pair of electrical storage sections 1 (e.g., electric double-layer capacitor 1b) and the outer surface of terminal plate 3 of the other electrical storage section 1 (e.g., electrical double-layer capacitor 1a) have reverse polarities.

The electrical double-layer capacitors configuring electrical storage section 1 are electrically connected in series by connecting member 20, which is a metal plate. In adjacent pair of electric double-layer capacitors 1a and 1b, connecting member 20 makes contact with and is bonded to the outer surface of terminal plate 3 of one electric double-layer capacitor 1a and the outer bottom face of outer case 4 of the other electric double-layer 1b. Multiple numbers of this pair of electric double-layer capacitors 1a and 1b are provided in the electrical storage unit in this exemplary embodiment.

In Fig. 1, in the electrical storage unit in this exemplary embodiment, cooling plates 21a and 2b are disposed in substantially parallel on both ends in the height direction of the electric double-layer capacitors configuring electrical storage section 1 to which connecting member 20 is bonded. Cooling plates 21a and 21b make contact with the outer surface of each connecting member 20 bonded to electrical storage section 1 via insulating sheet 22a and 22b made of the insulating member.

In the electrical storage unit in this exemplary embodiment, collector-exposed portion 2a and collector-exposed portion 2b formed in the wounded element in each electric double-layer capacitor configuring electrical storage section 1 are bonded to terminal plate 3 and outer case 4. Terminal plate 3 that acts as a terminal for leading out each electrode and outer case 4 can thus be bonded to element 2 in a large contact area. Accordingly, heat conductivity between terminal plate 3, outer case 4, and element 2 can be improved.

This exemplary embodiment employs the electric double-layer capacitor in which collector-exposed portion 2a and collector-exposed portion 2b are led out from both ends of element 2, and bonded to terminal plate 3 and outer case 4. In this electric double-layer capacitor, the heat is notably generated from both ends in the height direction of the electric double-layer capacitor where collector-exposed portion 2a and collector-exposed portion 2b are bonded to terminal plate 3 and outer case 4. In this exemplary embodiment, cooling plates 21a and 21b make contact with both ends of electric double-layer capacitor in the height direction. This configuration is particularly effective for an electric double-layer capacitor from which collector-exposed portion 2a and collector-exposed portion 2b are led out from both ends of element 2.

Still more, in the present invention, connecting member 20 connecting terminal plate 3 and outer case 4 of each electric double-layer capacitor of electrical storage section 1 makes contact with cooling plates 21a and 21b via insulating sheets 22a and 2b. This enables fast heat dissipation from element 2 of each electric double-layer capacitor to cooling plates 21a and 21b through terminal plate 3 or outer case 4 and connecting member 20.

The present invention has developed a new cooling method by changing the cooling method. A technological idea for the cooling method in the conventional electrical storage unit is to make the side face of electrical storage section contact with refrigerant to secure a contact area between the refrigerant and the electrical storage section for cooling.

The conventional configuration of making the side face of electrical storage section contact the refrigerant can secure a large contact area between the refrigerant and the electrical storage section. However, the heat energy generated from the element inside the electrical storage section is transferred to the case via electrolytic solution or the separator included in the element. Heat conductivity and heat-transfer coefficient of the electrolyte or separator are often lower than that between metals. Heat transfer property as a heat transfer passage is insufficient in the conventional electrical storage section, with consideration to heat conductivity and heat transfer in the heat transfer passage from the element to refrigerant and contact condition between the members.

The present invention is derived based on an idea of how to increase the heat transfer speed from element 2 to the refrigerant with respect to the disadvantage of the aforementioned conventional cooling method. Consequently, the electrical storage unit of the present invention increases the heat transfer property by transferring or conducting heat through metal material as much as possible in the heat transfer passage from element 2 to the refrigerant.

Still more, collector-exposed portion 2a, collector-exposed portion 2b, terminal plate 3, outer case 4, and connecting member 20 of the electrical storage unit in this exemplary embodiment are bonded, respectively, typically using laser-welding as the bonding method. Therefore, these members can be considered as an integral metal member, and thus it shows good heat transfer property or heat conductivity as the heat transfer passage.

Furthermore, in this exemplary embodiment, the electrical storage unit has a configuration that cooling plates 21a and 21b make contact with the outer surface of connecting member 20 bonded to electrical storage section 1 via insulting sheets 22a and 22b. To improve the heat dissipation from electrical storage section 1, insulating sheets 22a and 22b with good heat conductivity are used. A preferable insulating material for insulating sheets 22a and 22b includes silicon, urethane, Teflon®, PET, PPS, and rubber material.

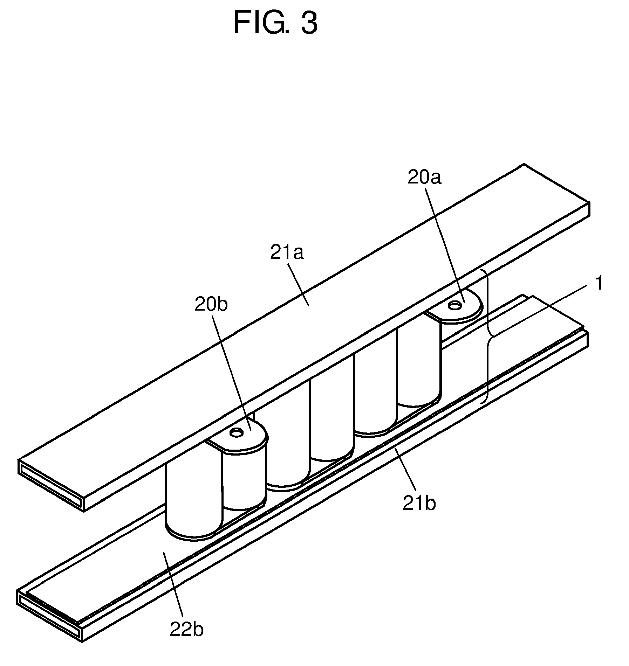

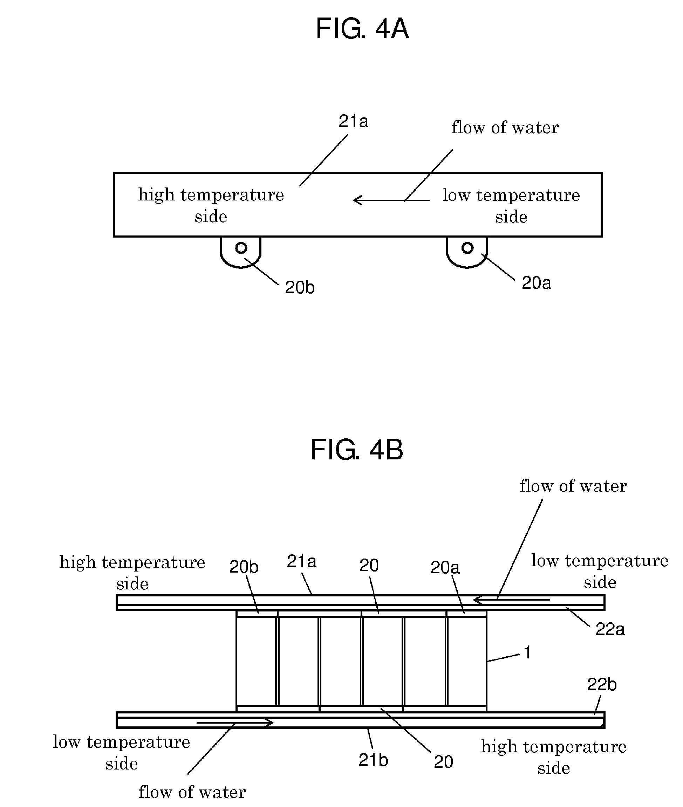

Fig. 3 is a perspective view of the electrical storage unit in the first exemplary embodiment of the present invention. Fig. 4A is a top view of the electrical storage unit in the first exemplary embodiment of the present invention. Fig. 4B is a front view of the electrical storage unit in the first exemplary embodiment of the present invention.

In Fig. 3, cooling plates 21a and 21b are, for example, configured with a rectangular tube, and they contain water (not illustrated) inside as a refrigerant. For example, water in cooling plates 21a and 21b is stored in a tank (not illustrated) provided separately from the electrical storage unit and water is preferably supplied from this tank. Water is filled in cooling plates 21a and 21b, and water runs inside cooling plates 21a and 21b in one direction, and finally returns to the tank after circulation. Water is preferably cooled inside the tank as required.

In this way, electrical storage section 1 is cooled using cooling plates 21a and 21b containing water. To further efficiently cool electrical storage section 1, water in cooling plates 21a and 21b, which sandwich electrical storage section 1, preferably runs in opposite direction to each other. If water in cooling plates 21a and 21b runs in the same direction, electric double-layer capacitor of electrical storage section 1 disposed near the start point of water circulation can be sufficiently cooled. However, the electric double-layer capacitor disposed near the end point of water circulation may not be sufficiently cooled due to circulating water being warmed by heat energy absorbed from each electric double-layer capacitor before reaching the end point of circulation.

Furthermore, the cooling characteristic of each electric double-layer capacitor configuring electrical storage section 1 becomes uneven, and a degradation speed becomes uneven due to increased internal resistance between electric double-layer capacitors. As a result, reliability may differ by electric double-layer capacitor.

In Figs. 4A and 4B, by setting opposite water running directions for cooling plates 21a and 21b, at least one of cooling plates making contact with the electric double-layer capacitor carries water from near the start point of water circulation. Therefore, the electric double-layer capacitor can be efficiently cooled by its temperature difference with water, and also the cooling characteristic of each electric double-layer capacitor can be made even.

In this exemplary embodiment, connecting members 20 made of metal plates are disposed at electrical storage section 1. Therefore, a plate-like cooling section is used for cooling, so as to match to the flat surface of multiple connecting members 20 and shorten the height. However, the present invention is not particularly limited. A heat pipe may be used for cooling.

Furthermore, electrical storage section 1 used in the electrical storage unit in the first exemplary embodiment of the present invention has electric double-layer capacitors disposed adjacent to each other with their terminal plates 3 in the opposite directions. However, the present invention is not limited to this direction. Terminal plates 3 of adjacent electric double-layer capacitors may be disposed in the same direction. Electric polarity that each terminal plate 3 carries may be made opposite. More specifically, the outer bottom face of outer case 4 of one of a pair of electrical storage sections 1 and the outer surface of terminal plate 3 of the other electrical storage section 1 may have the same polarity. Also in the first exemplary embodiment of the present invention, electrical storage sections 1 used in the electrical storage unit are electrically connected in series. However, the present invention is not limited to this structure. They may be connected in parallel.

In addition, in Fig. 3, one end of multiple connecting members 20 electrically connecting multiple electric double-layer capacitors disposed is connected to the electric double-layer capacitor. Furthermore, the other end is connected to an external circuit or an electronic component (not illustrated). Connecting members 20a and 20b, which are the other ends in the above description, are preferably exposed substantially vertically with respect to a height direction of electric double-layer capacitor and a flow direction of cooling plates 21a and 21b. This configuration enables connection with the external circuit or electronic component in low resistance without using excessive wiring (not illustrated). Furthermore, by providing the external circuit to be connected, for example, on the outer surface of cooling plates 21a and 21b, this external circuit or electronic component can also be cooled at the same as electrical storage section 1 by cooling plates 21a and 21b.

Element 2 used in the electrical storage unit in this exemplary embodiment is directly bonded to terminal plate 3 and outer case 4. However, the present invention is not limited to this structure. An intermediate member (not illustrated) made of metal may be connected to collector-exposed portion 2a or collector-exposed portion 2b of element 2 in advance. By bonding this intermediate member to terminal plate 3 or metal case 4, a bonding condition of element 2 and intermediate member or smoothness can be confirmed at bonding the intermediate member to element 2. Accordingly, reliability improves in manufacturing the electric double-layer capacitor.

This exemplary embodiment refers to the electrical storage unit employing the electric double-layer capacitor in description of the electrical storage unit of the present invention. However, the electrical storage unit of the present invention is not limited to the above structure. An electrochemical capacitor using electrolyte containing lithium ion, lithium-ion secondary battery, or a storage battery such as nickel hydride battery is also applicable to the electrical storage section. In other words, any structure is applicable as long as the structure of element in the battery includes the collector-exposed portions at its both ends, same as the electric double-layer capacitor in the exemplary embodiment, and this pair of collector-exposed portions are bonded and electrically connected to the case and a cover sealing this case. Accordingly, heat can be preferentially released from both ends in the height direction of battery, same as in this exemplary embodiment.

In this exemplary embodiment, element 2 is made by winding. However, a structure in which positive electrode foil and negative electrode foil face each other and are laminated and collector-exposed portions formed on these electrodes protrude in opposite directions may be applicable. In this case, the outer case is preferably a square tube, not a cylindrical tube with bottom as in the first exemplary embodiment.

This exemplary embodiment refers to the structure of electrical storage unit using electrolytic solution. However, the present invention is not limited to electrolytic solution. Solid electrolyte or gelled electrolyte containing a small amount of binder in electrolytic solution is also applicable.

Furthermore, this exemplary embodiment employs multiple electric double-layer capacitors aligned in parallel for configuring electrical storage section 1 shown in Figs. 1 to 4 for description. However, the present invention is not limited to this structure. As long as a pair of cooling plates is disposed on both ends of each electric double-layer capacitor, multiple electric double-layer capacitors aligned in multiple lines is also be applicable.

### (SECOND EXEMPLARY EMBODIMENT)

A cooling plate of an electrical storage unit of the present invention is described below with reference to drawings. Components other than cooling plate 21 in the second exemplary embodiment have the same structure as that of the first exemplary embodiment.

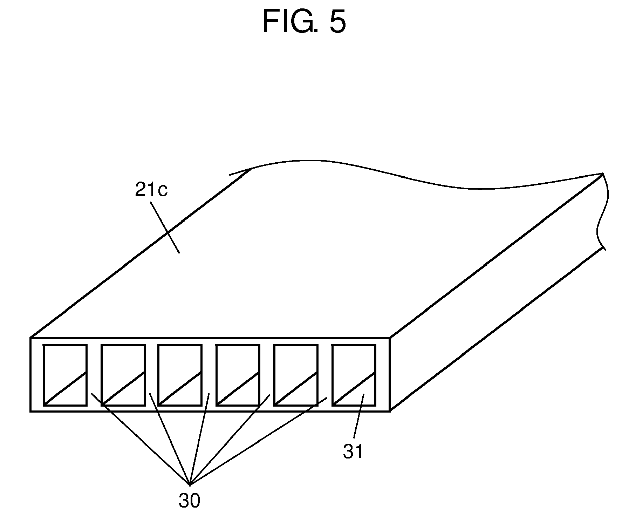

Fig. 5 is a sectional perspective view of cooling plate 21c employed in the electrical storage unit in the second exemplary embodiment of the present invention.

Cooling plate 21c used in the electrical storage unit in this exemplary embodiment has partition 30 with a predetermined thickness inside so as to form multiple water passages 31 for running water, which is refrigerant.

By forming this partition 30 inside cooling plate 21c, area of partition 30 making contact with water, which is refrigerant, increases, compared to cooling plates 21a and 21b without partition 30 in the first exemplary embodiment. By increasing the contact area of cooling plate 21c and water, heat transfer rate between cooling plate 21c and water can be increased. Accordingly, heat from electrical storage section 1 can be more efficiently absorbed by the refrigerant.

As described above, the electrical storage unit of the present invention efficiently cools the electrical storage section by bonding the ends of electrodes configuring the element to the terminal plate and an outer case. Therefore, multiple connecting members electrically connecting the electrical storage section are connected to at least the outer bottom face of the outer case or the outer surface of the terminal plate where the electrode is led out from the element. The cooling plate containing water is disposed on the outer surface of these connecting members to cool the electrical storage section.

This allows heat generated inside the electrical storage section transferred from the element to the terminal plate or outer case that is bonded in a broad contact area. Heat is then released from the terminal plate or outer case to the attached cooling plate. Heat from the electrical storage section can be transferred to the refrigerant in a shorter distance and a broader contact area by configuring the heat transfer passage of the cooling plates with a material with good heat conductivity and heat transfer property. The electrical storage section can thus be cooled faster. Accordingly, reliability of the electrical storage unit can be improved.

### INDUSTRIAL APPLICABILITY

The electrical storage unit of the present invention includes the electrical storage section in which the collector exposed portions formed on both ends of the element are bonded to the terminal plate or the outer case, respectively, and the cooling plate making contact with the outer surface of the terminal plate or the outer bottom face of the outer case of this electrical storage section. This enables heat release from inside the electrical storage unit to the cooling section through the heat transfer passage made of a material with high heat conductivity, such as metal, in the electrical storage unit of the present invention. Heat generated from the electrical storage section during charge and discharge can thus be efficiently cooled. Accordingly, the present invention is applicable to the electrical storage section of electrical equipment and vehicles where a large amount of heat is generated.

### REFERENCE MARKS IN THE DRAWINGS

- 1: Electrical storage section
- 1a, 1b: Electric double-layer capacitor
- 2: Element
- 2a: Collector-exposed portion
- 2b: Collector-exposed portion
- 3: Terminal plate (sealing member)
- 4: Outer case
- 4a: Drawing
- 4b: Curling portion
- 5: Sealing material
- 20, 20a, 20b: Connecting member
- 21a, 21b, 21c: Cooling plate
- 22a, 22b: Insulating sheet
- 30: Partition
- 31: Water passage

## Claims

1. An electrical storage unit comprising:
an element including:
a pair of collectors made of metal foil;
a positive electrode formed on one of the pair of collectors;
a negative electrode formed on an other of the pair of collectors; and
a separator disposed between a pair of electrodes formed of the positive electrode and the negative electrode;
an electrical storage section including:
a tubular outer case with bottom for housing the element and electrolyte; and
a sealing member for sealing a rim of an opening of the outer case in an insulated state; and
a cooling section including refrigerant for cooling the electrical storage section;
wherein a collector-exposed portion where no electrode is formed is provided on an end of each of the pair of collectors;
the element is one of wound and laminated such that the collector-exposed portions protrude in opposite directions to each other;
the collector-exposed portion provided on one of the pair of collectors is attached to an inner face of the sealing member;
the collector-exposed portion provided on the other of the pair of collectors is attached to an inner bottom face of the outer case; and
an insulating member is disposed between an outer surface of the sealing member and an outer bottom face of the outer case and the cooling section.

2. The electrical storage unit of claim 1, further comprising:
a connecting member for electrically connecting a plurality of the electrical storage sections,
wherein
the connecting member makes contact with and is electrically connected to one of an outer bottom face of the outer case of at least one of the plurality of electrical storage sections and an outer surface of the sealing member; and
the insulating member is disposed between the cooling section and the connecting member.

3. The electrical storage unit of claim 2,
wherein
at least the sealing members of a pair of electrical storage sections are disposed in opposite directions to each other;
the outer bottom face of the outer case of the one of the pair of electrical storage sections and the outer surface of the sealing member of the other of the pair of electrical storage sections have opposite polarities to each other;
the outer bottom face of the outer case of the one of the pair of electrical storage sections and the outer surface of the sealing member of the other of the pair of electrical storage sections are electrically connected by the connecting member; and
the cooling section is disposed on both ends of the plurality of electrical storage sections via the connecting member and the insulating member.

4. The electrical storage unit of claim 2,
wherein
at least the sealing members of the pair of electrical storage sections are disposed in a same direction;
the outer bottom face of the outer case of one of the pair of electrical storage sections and the outer surface of the sealing member of an other of the pair of electrical storage sections have same polarity;
each of the outer bottom faces of the outer cases of the pair of electrical storage sections is electrically connected to each other by the connecting members, or each of the outer surfaces of the sealing members of the pair of electrical storage sections is electrically connected to each other by the connecting members; and
the cooling section is disposed on both ends of the plurality of electrical storage sections via the connecting member and the insulating member.

5. The electrical storage unit of claim 1,
wherein
the cooling section is provided in a pair parallel to each other; and the refrigerant inside the pair of cooling sections move in opposite directions to each other.

6. The electrical storage unit of claim 1,
wherein a partition dividing internal space being formed inside the cooling section.

7. The electrical storage unit of claim 2,
wherein
an other end of the connecting member whose one end is connected to the plurality of electrical storage sections is exposed vertically relative to an adjacent direction of the plurality of electrical storage sections and a height direction of the electrical storage sections.

8. The electrical storage unit of claim 1,
wherein
at least one of a pair of the collector-exposed portions is bonded to an intermediate member formed of a metal plate, and
an opposite face to a face, which is connected to an element, of the intermediate member is bonded to one of the sealing member and the outer case.
